# EUROPEAN PATENT SPECIFICATION

(11) **EP 2 818 007 B1**
(45) Date of publication and mention of the grant of the patent: **23.02.2022**
(21) Application number: 12869132.6
(22) Date of filing: 24.02.2012
(51) Int. Cl.: H04W 48/18, H04W 48/14, H04W 84/12

(54) **METHOD AND APPARATUS FOR ESTABLISHING A CONNECTION WITH AN ACCESS NETWORK BASED UPON ACCESS NETWORK INTERWORKING INFORMATION**
VERFAHREN UND VORRICHTUNG ZUM VERBINDUNGSAUFBAU MIT EINEM ZUGANGSNETZWERK BASIEREND AUF INFORMATIONEN ÜBER ZUGANGSNETZWERKVERKNÜPFUNGEN
PROCÉDÉ ET APPAREIL D'ÉTABLISSEMENT DE CONNEXION AVEC UN RÉSEAU D'ACCÈS EN FONCTION D'INFORMATIONS D'INTERFONCTIONNEMENT DE RÉSEAU D'ACCÈS

(43) Date of publication of application: 31.12.2014
(73) Proprietor: Nokia Technologies Oy, 02610 Espoo (FI)
(72) Inventor: KEKKI, Sami Johannes, 00420 Helsinki (FI)
(74) Representative: Ruuskanen, Juha-Pekka
(86) International application number: PCT/IB2012/050873
(87) International publication number: WO 2013/124715

(56) References cited:
- WO-A1-2011/058395
- WO-A1-2012/023887
- US-A1- 2011 171 953
- US-A1- 2011 188 376
- JANNE TERVONEN: "Deliverable DA2.2.22 Offloading Traffic from Cellular Networks with PBRM", INTERNET CITATION, 30 June 2010 (2010-06-30), pages 1-39, XP007919591, Retrieved from the Internet: URL:- [retrieved on 2011-10-19]
- LG ELECTRONICS ET AL: "Clarification on Inter-System Routing Policies - Alignment with Stage 3", 3GPP DRAFT; S2-110180_EMAIL_S2-110053_WAS105637_23402_ CR0958_ISRPS_REV4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20110117 - 20110121, 26 January 2011 (2011-01-26), XP050631334, [retrieved on 2011-01-26]
- MOTOROLA MOBILITY: "Solution with Inter-APN Routing Policies", 3GPP DRAFT; S2-111733-OPIIS_PCR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava; 20110411, 6 April 2011 (2011-04-06), XP050524634, [retrieved on 2011-04-06]
- NOKIA SIEMENS NETWORKS ET AL: "Correction of Inter System Routing Policy (ISRP) MO structure", 3GPP DRAFT; C1-110053, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Ljubljana; 20110124, 17 January 2011 (2011-01-17), XP050479533, [retrieved on 2011-01-17]
- MOTOROLA MOBILITY: "Scenarios for data identification in ANDSF", 3GPP DRAFT; S2-111732-DIDA_PCR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava; 20110411, 6 April 2011 (2011-04-06), XP050524633, [retrieved on 2011-04-06]
- MOTOROLA MOBILITY: "ANDSF MO support for Non-seamless WLAN Offload", 3GPP DRAFT; C1-110338 24312_CR0050_(REL-10) NSWLAN OFFLOAD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Ljubljana; 20110124, 16 January 2011 (2011-01-16), XP050479516, [retrieved on 2011-01-16]
- "Universal Mobile Telecommunications System (UMTS); LTE; Access to the 3GPP Evolved Packet Core (EPC) via non-3GPP access networks; Stage 3 (3GPP TS 24.302 version 10.6.0 Release 10)", 1 January 2012 (2012-01-01), TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, XP014069331, * paragraph [6.8.2.4] *
- 'Access Network Discovery and Selection Function (ANDSF) Management Object (MO)' 3GPP TS 24.312 VERSION 10.4.0 10 October 2011, XP055160074 Retrieved from the Internet: <URL:http://www.etsi.org/deliver/etsi_ts/12 4300_124399/124312/10. 04.00_60/ts_124312v1 00400p.pdf>

## Description

### TECHNOLOGICAL FIELD

A method, apparatus and computer program product are provided according to an example embodiment in order to facilitate the use of access networks and, more particularly, to utilize an access network in accordance with access network interworking information.

### BACKGROUND

User equipment, such as mobile terminals, may access a core network via an access network. With respect to the system architecture evolution (SAE) of the third generation partnership project (3GPP) system, the evolved packet core (EPC) network may serve as a common core network for all radio access technologies that are in communication with the core network operator. As such, various types of access networks, such as an evolved universal mobile telecommunications system (UMTS) terrestrial radio access network (E-UTRAN), a high-speed packet access (HSPA) network, a global system for mobile communications (GSM)/EDGE radio access network (GERAN), a wireless local area network (WLAN) or a WiMAX network, may be utilized to access the core network.

In order to influence the manner in which a mobile terminal utilizes the available access networks to access the core network, a logical element termed the access network discovery and selection function (ANDSF) has been developed. The ANDSF includes a management object that initially included two sets of information, namely, the access network discovery information and the inter-system mobility policy. The access network discovery information informs the mobile terminal of the access networks that are available to interwork with the core network, that is, to allow access to the core network. Following its inception, the ANDSF management object has evolved to also include a set of policy information, such as an inter-system routing policy. As a result of its evolution, the ANDSF management object has become quite large and complex.

The internet traffic to be supported by cellular operator's network has increased. This increase in internet traffic may require a cellular operator to further invest for additional spectrum and infrastructure to support the internet traffic even though the revenue that is obtained by the cellular operator is decreasing when considered in relation to the quantity of internet traffic. In order to reduce the need for at least some of the additional spectrum and infrastructure, offloading of internet traffic to WLANs has gained popularity among the cellular operators. While internet traffic may be offloaded to WLANs that interwork with the core network, standalone WLANs that do not interwork with the core network may also support the internet traffic and, as such, be useful for purposes of offloading the internet traffic from a cellular operator's network.

Although standalone WLANs may be useful for offloading internet traffic, the ANDSF management object is only configured to identify the access networks that interwork with the core network including, for example, the interworking WLANs, and not standalone WLANs. As such, a mobile terminal that relies upon the ANDSF to identify the available access networks may not identify the standalone WLANs as a candidate for offloading internet traffic or for other purposes.

"Deliverable DA2.2.22 Offloading Traffic from Cellular networks with PBRM", Janne Tervonen describes how Policy-Based Resource Management can be exploited in WLAN offload. "Clarification on Inter-System Routing Policies - Alignment with stage 3", LG Electronics et al, 3GPP draft; S2-110180, relates to the traffic on which Inter-System Policies are applied. "Solution with Inter-APN Routing Policies", Motorola Mobility, 3GPP draft; S2-111733, relates to enabling IP interfaces selection in the UE according to operator policies. "Correction of Inter System Routing Policy (ISRP) MO Structure", Nokia Siemens Networks et al, 3GPP draft'; C1-110053, relates to a simplified ANDSF MO structure. "Scenarios for data identification in ANDSF", Motorola Mobility, 3GPP draft; S2-111732, provides a non-exhaustive list of scenarios that drive the need for enhanced IP flow identification in ANDSF policies. "ANDSF MO support for Non-seamless WLAN offload", Motorola Mobility, 3GPP draft; C1-110338, aims to accommodate the functionality that Inter-System Routing policy may identify which traffic shall or shall not be non-seamlessly offloaded to a WLAN when available.

### BRIEF SUMMARY

An apparatus, method and computer program product are therefore provided for supplementing the ANDSF discovery information with access network interworking information that identifies access networks and indicates whether the respective access networks support either interworking with a core network or standalone operation. Based upon the access network interworking information, a method, apparatus and computer program product may consider the establishment of connections not only with interworking access networks, but also standalone access networks. Thus, internet and other traffic may be offloaded to standalone access networks in at least some instances, thereby reducing the traffic that must be supported by a cellular operator's network and correspondingly reducing the necessity for investment in additional spectrum and infrastructure. An apparatus associated with a mobile terminal is provided in accordance with one embodiment that includes means for, at a mobile terminal: accessing access network discovery and selection function discovery information, wherein the access network discovery and selection function discovery information comprises access network interworking information identifying one or more wireless local area network access networks and indicating that the respective wireless local area network access networks support interworking with a core network, wherein the access network interworking information comprises information identifying one or more respectively supported interfaces. The means are also configured to cause a connection to be established with a respective wireless local area network access network in accordance with the access network discovery and selection function discovery information.

In a further embodiment, a method is provided that includes, at a mobile terminal, accessing access network discovery and selection function (ANDSF) discovery information. The ANDSF discovery information includes access network interworking information identifying one or more access networks and indicating that the respective access networks support interworking with a core network, wherein the access network interworking information comprises information identifying one or more respectively supported interfaces. The method of this embodiment also includes causing a connection to be established with a respective access network in accordance with the ANDSF discovery information.

In a further embodiment, a computer program product includes at least one non-transitory computer- readable storage medium having computer-executable program code instructions stored therein, the computer-executable program code instructions comprising program code instructions that, when executed by a processor cause a mobile terminal to: access access network discovery and selection function discovery information, wherein the access network discovery and selection function discovery information comprises access network interworking information identifying one or more wireless local area network access networks and indicating that the respective wireless local area network access networks support interworking with a core network (14), wherein the access network interworking information further comprises information identifying one or more respectively supported interfaces; and cause a connection to be established with a respective wireless local area network access network in accordance with the access network discovery and selection function discovery information.

### BRIEF DESCRIPTION OF THE SEVERAL VIEWS OF THE DRAWINGS

Having thus described certain embodiments of the invention in general terms, reference will now be made to the accompanying drawings, which are not necessarily drawn to scale, and wherein:
Figure 1 is a schematic representation of a system including a core network and a plurality of access networks that may be specifically configured to support an example embodiment of the present invention;
Figure 2 is a block diagram of an apparatus that may be specifically configured in accordance with an example embodiment of the present invention;
Figure 3 is a flowchart illustrating the operations performed by an apparatus in accordance with an example embodiment of the present invention;
Figure 4 is a representation of an ANDSF management object that may be modified in accordance with an example embodiment of the present invention; and
Figure 5 is a representation of a portion of an ANDSF management object having an access network information reference container that includes additional information in accordance with an example embodiment of the present invention.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), may be differentiated from a "computer-readable transmission medium," which refers to an electromagnetic signal.

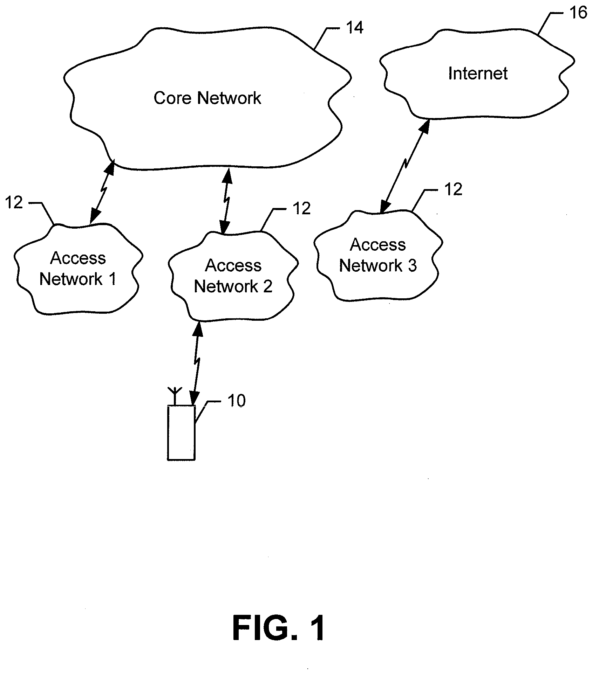

Referring now to Figure 1, a mobile terminal 10 may communicate with a core network 14, such as an evolved packet core (EPC) network, a general packet radio system (GPRS) core network or the like, via any one of a plurality of different access networks 12, designated as access network 1 and access network 2 in the illustrated embodiment. Additionally, the mobile terminal may communicate with another network illustrated by way of example as the internet 16 via another one or more access networks, designated as access network 3 in the illustrated embodiment. The mobile terminal may be any of various types of mobile communication devices such as, for example, mobile telephones, personal digital assistants (PDAs), pagers, laptop computers, tablet computers or any of numerous other hand held or portable communication devices, computation devices, content generation devices, content consumption devices, or combinations thereof.

As shown in Figure 1, the mobile terminal 10 may be configured to communicate with the core network 14 via any one or several of a plurality of access networks 12. By way of example, the access networks may include E-UTRAN access networks, HSPA access networks, GERAN access networks, WLAN access networks, WiMAX access network or the like. Some of the access networks, such as those designated as access network 1 and access network 2 in the illustrated embodiment, may be configured to interwork with the core network. The access networks that interwork with the core network provide for access to the core network by the mobile terminal. As such, the mobile terminal may communicate with or via the core network by exchanging signals with the interworking access network. One example of an interworking access network is an interworking WLAN (I-WLAN). An I-WLAN is configured to interwork with an operator's GPRS core network in a manner defined by an I-WLAN specification.

In contrast to the access networks 12 that interwork with the core network 14, other access networks are standalone access networks that do not interwork with the core network and which therefore do not provide the mobile terminal 10 with access to the core network. However, standalone access networks, such as access network 3 of Figure 1, permit the mobile terminal to directly access other networks, such as the internet 16, an intranet or the like. Examples of standalone access networks include standalone WLANs, Wi-Fi hotspots and the like. Although standalone access networks do not interwork with the core network and therefore do not permit the mobile terminal access to the core network, it may be desirable for the mobile terminal to utilize standalone access networks in some instances in order to offload traffic from the core network, thereby conserving resources of the core network.

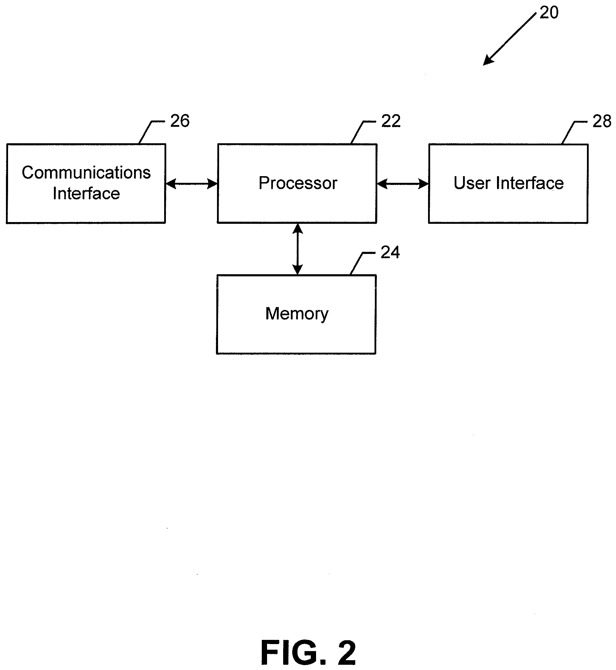

Referring now to Figure 2, an apparatus 20 that may be embodied by or otherwise associated with a mobile terminal 10 for selectively establishing a connection wth an interworking access network or a standalone access network may include or otherwise be in communication with a processor 22, a memory device 24, a communication interface 26 and a user interface 28. In some example embodiments, the processor (and/or coprocessors or any other processing circuitry assisting or otherwise associated with the processor) may be in communication with the memory device via a bus for passing information among components of the apparatus. The memory device may include, for example, one or more non-transitory volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The apparatus 20 may, in some embodiments, be embodied by a mobile terminal 10. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 22 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading. In the embodiment in which the apparatus 20 is embodied as a mobile terminal 10, the processor may be embodied by the processor of the mobile terminal.

In an example embodiment, the processor 22 may be configured to execute instructions stored in the memory device 24 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a mobile terminal 10) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

Meanwhile, the communication interface 26 may be any means such as a device or circuitry embodied in either hardware or a combination of hardware and software that is configured to receive and/or transmit data from/to an access network 12 and/or any other device or module in communication with the apparatus 20. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In some example embodiments, such as instances in which the apparatus 20 is embodied by a mobile terminal 10, the apparatus may include a user interface 28 that may, in turn, be in communication with the processor 22 to receive an indication of a user input and/or to cause provision of an audible, visual, mechanical or other output to the user. As such, the user interface may include, for example, a keyboard, a mouse, a joystick, a display, a touch screen(s), touch areas, soft keys, a microphone, a speaker, or other input/output mechanisms. Alternatively or additionally, the processor may comprise user interface circuitry configured to control at least some functions of one or more user interface elements such as, for example, a speaker, ringer, microphone, display, and/or the like. The processor and/or user interface circuitry comprising the processor may be configured to control one or more functions of one or more user interface elements through computer program instructions (e.g., software and/or firmware) stored on a memory accessible to the processor (e.g., memory device and/or the like).

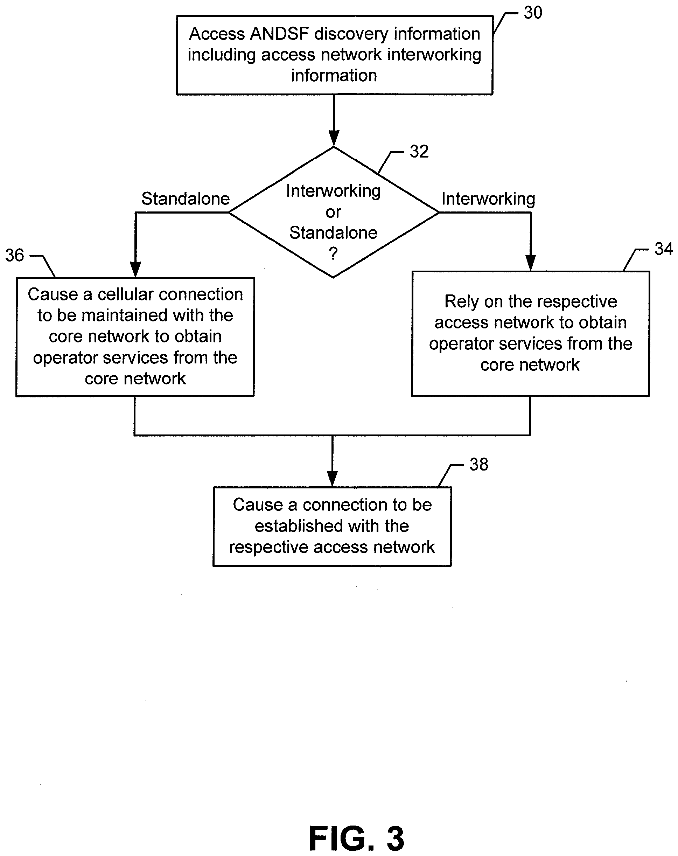

In accordance with an example embodiment of the present invention, access network interworking information is provided with the access network discovery and selection function (ANDSF) discovery information in order to facilitate access by a mobile terminal 10 of an interworking access network or a standalone access network in an orderly and efficient manner. As shown by reference to Figure 3, for example, an apparatus 20 of one embodiment of the present invention as embodied by a mobile terminal may include means, such as a processor 22, the communication interface 26 or the like, for accessing ANDSF discovery information including access network interworking information. See operation 30. The ANDSF discovery information may be provided by the access network 12, such as by being downloaded or pushed by the access network to the mobile terminal for storage, for example, by the memory 24 of the mobile terminal. As such, access to the ANDSF discovery information including access network interworking information of operation 30 of Figure 3 may include the processor accessing ANDSF discovery information stored locally in the memory of the mobile terminal. Alternatively, the apparatus, such as the processor, the communication interface or the like, requesting and therefore pulling the ANDSF discovery information including access network interworking information from the access network such that the access to the ANDSF discovery information referenced in operation 30 of Figure 3 may include the pulling of the information from a respective access network.

The access to the ANDSF discovery information including access network interworking information may be performed at various instances in time, such as in accordance with a predefined schedule, at regular intervals, based on validity conditions associated with the access network interworking information or the like. However, in one embodiment, the apparatus 20, such as the processor 22, the communication interface 26 or the like, may be configured to access the ANDSF discovery information including access network interworking information in an instance in which the mobile terminal 10 is desirous of network communications, such as communications with the core network 14, or with another network, such as the internet 16, an intranet or the like.

In accordance with an example embodiment of the present invention, the ANDSF discovery information including the access network interworking information provides additional information that permits the mobile terminal 10 to connect with either an interworking access network or a standalone access network in an efficient and orderly manner. In this regard, the access network interworking information that is accessed may identify one or more access networks 12 and may indicate whether the respective access network supports interworking with the core network 14 or supports standalone operation. In an instance in which the access network interworking information identifies an access network that supports interworking with the core network, the access network interworking information may also include information that describes the manner in which the interworking is to be accomplished, such as by indicating whether client based internet protocol (IP) mobility or whether IP security support is required by the mobile terminal. Additionally or alternatively, the access network interworking information may include information regarding any restrictions in regards to the service availability, such as if a particular type of traffic is restricted from use of the access network, e.g., traffic generated by peer-to-peer applications may be restricted from use of the access network, and/or if operator voice service is not supported by the access network.

In an instance in which the access network interworking information indicates that an access network 12 interworks with the core network 14, the apparatus 20 embodied by the mobile terminal 10 may include means, such as the processor 22, the communication interface 26 or the like, for relying on the respective access network to obtain operator services from the core network. See operation 34 of Figure 3. However, in an instance in which the access network interworking information indicates that the respective access network is a standalone access network, the apparatus embodied by the mobile terminal may include means, such as the processor, the communications interface or the like, for cause a cellular connection to be maintained with the core network so as to obtain operator services from the core network, while other communication is conducted by the mobile terminal with another network via the standalone access network. See operation 36. In this regard, the mobile terminal may access the internet 16 via the standalone access network in a manner that is independent of the core network, but may maintain a cellular connection with the core network as to continue to obtain operator services from the core network.

As shown in operation 38 of Figure 3, the apparatus 20 embodied by a mobile terminal 10 may also include means, such as the processor 22, the communication interface 26 or the like, for causing a connection to be established with the respective access network 12 in accordance with the ANDSF discovery information. In an instance in which the access network interworking information indicates that a respective access network is an interworking network, such as an I-WLAN, the apparatus, such as the processor, the communication interface or the like, may cause a connection to be established with the interworking access network in accordance with the ANDSF discovery information by also relying upon the interworking access network to obtain operator services from the core network 14. However, in an instance in which the access network interworking information indicates that the respective access network is a standalone access network, the apparatus, such as the processor, the communication interface or the like, may cause a connection to be established with the standalone access network in accordance with the ANDSF discovery information by also causing a cellular connection to be maintained with the core network to obtain operator services from the core network concurrent with the connection to another network, e.g., the internet 16, via the standalone access network. As such, the mobile terminal may efficiently utilize a standalone access network in order to access networks other than the core network, such as the internet, an intranet or the like, thereby permitting traffic to be offloaded from the core network so as to conserve the resources of the core network, while still permitting the mobile terminal to obtain operator services from the core network via a distinct cellular connection.

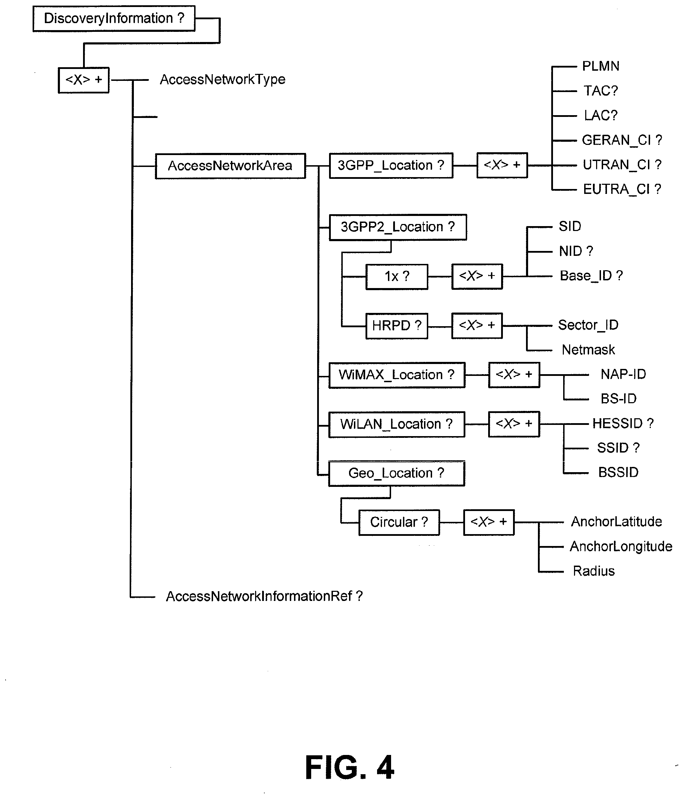

The access network interworking information may be provided in various manners. By way of example, the organization and content of an ANDSF management object is defined in the 3GPP Technical Specification (TS) 24.312 is shown in Figure 4. In this regard, the ANDSF discovery information includes an access network type container, an access network area container, and an access network information reference container. As shown in Figure 4, for example, the access network area container may include, for example, information regarding a 3GPP location, a 3GPP2 location, a WiMAX location, a WLAN location or a Geo location. The access network interworking information may be included within the ANDSF discovery information in various different manners. By way of one example, the ANDSF management object may include an additional core network interworking leaf or node including the access network interworking information at the same level in the hierarchy as the access network type container, the access network area container and the access network information reference container. In this regard, a core network interworking leaf or node could be included in the location indicated by the horizontal line between the access network type container and the access network area container. In one embodiment, the access network interworking information may be included within a leaf or a node depending upon the size of the access network interworking information with larger amounts of access network interworking information being included within a node having one or more leaves and smaller amounts of access network interworking information being included within a leaf.

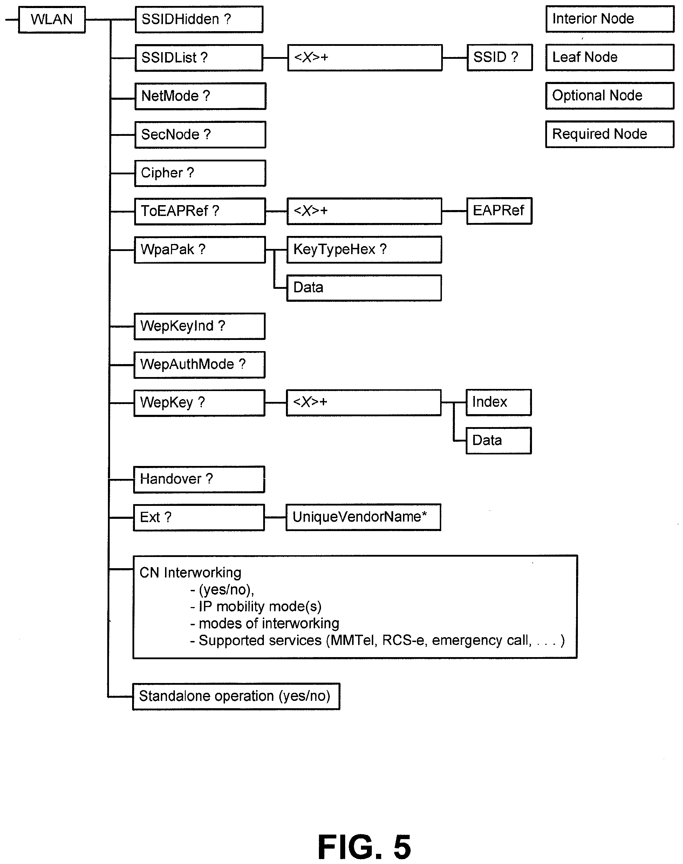

Alternatively, the access network interworking information may be included within one of the preexisting containers, such as the access network type container or the access network information reference container. By way of example, Figure 5 depicts the access network reference container for a WLAN access network. In this example, the access network interworking information has been incorporated in a core network (CN) interworking leaf and the standalone operation leaf. The CN interworking leaf includes a "yes/no" indication as to whether the respective WLAN access network is configured to interwork with the core network or not, as well as other access network information described below. Correspondingly, the standalone operation leaf may provide a binary 'yes/no" indication as to whether the WLAN access network is configured for standalone operation or not.

In addition to indicating whether an access network 12 is an interworking access network or a standalone access network, the access network interworking information may include additional information to facilitate communication via the respective access network. In one embodiment, for example, the access network interworking information may include information identifying one or more supported interfaces in an instance in which the respective access network supports interworking with the core network. In this regard, interworking access networks, such as I-WLANs, may include a plurality of interfaces, such as interfaces S2a, S2b and S2c for interworking WLAN access networks. In this regard, interface S2a provides for network based mobility for trusted access without an evolved packet data gateway (ePDG), S2b provides for network based mobility for untrusted access with ePDG and S2c provides for client based mobile IP. By identifying the interface of the respective interworking access network, the mobile terminal 10 may communicate with the interworking access network more efficiently. Although the information identifying the supported interfaces may be provided in various manners, including as predefined values within the access network type container, the information regarding the supported interfaces may be provided as modes of operation in the CN interworking information provided in the access network information reference container in the embodiment of Figure 5.

Additionally, or alternatively, the access network interworking information may include information regarding one or more IP mobility modes, such as Proxy Mobile IP version 4 (PMIPv4), Proxy Mobile IP version 6 (PMIPv6), Dual Stack Mobile IP version 6 (DSMIPv6), etc. The access network interworking information relating to the IP mobility modes may be provided within the ANDSF discovery information in various manners, but, in one embodiment, is included within the CN interworking information provided by the access network information reference container as shown in Figure 5.

Still further, the access network interworking information may also or alternatively include information regarding one or more supported services, such as multimedia telephony (MMTel) services, rich communication suite (RCS-e) services, emergency services or the like. The access network interworking information may also include information regarding any restrictions in the set of supported services. For example, a Wi-Fi access network may support interworking with a core network 14, but may not support all operator services by failing, e.g., to support operator voice service. As before, the access network interworking information including the supported services may be provided in various manners by the ANDSF discovery information, such as within the CN interworking information included within the access network information reference container as shown in Figure 5 in one embodiment.

By providing access network interworking information that identifies the access networks 12 and indicates whether the respective access networks interwork with the core network 14 or are configured for standalone operation, the method, apparatus and computer program product of an example embodiment may provide for more efficient and orderly access of the access network by the mobile terminal 10, such as by utilizing standalone access in instances in which the mobile terminal need not communicate with the core network so as to offload traffic from the core network, while still being able to utilize interworking access networks to access the core network in instances in which the mobile terminal requires communication with and/or support by the core network. By optionally providing additional information regarding the access networks within the access network interworking information, such as the supported interfaces, the IP mobility modes, the supported services and the like, the method, apparatus and computer program product of an example embodiment may facilitate efficient communication with the access network.

As described above, Figure 3 illustrates a flowchart of an apparatus, method, and computer program product from the perspective of a mobile terminal 10 according to an example embodiment of the invention. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory device 24 of an apparatus 20 employing an embodiment of the present invention and executed by a processor 22 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a non-transitory computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions. It will also be understood that one or more blocks of the flowchart, and combinations of blocks in the flowchart, may be implemented by special purpose hardware-based computer systems which perform the specified functions, or combinations of special purpose hardware and computer instructions.

In some embodiments, certain ones of the operations above may be modified or further amplified. Modifications, additions, or amplifications to the operations above may be performed in any order and in any combination. In this regard, many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising means for, at a mobile terminal (10):
accessing (30) access network discovery and selection function discovery information, wherein the access network discovery and selection function discovery information comprises access network interworking information identifying one or more wireless local area network access networks (12) and indicating that the respective wireless local area network access networks support interworking with a core network (14), wherein the access network interworking information further comprises information identifying one or more respectively supported interfaces; and
causing (38) a connection to be established with a respective wireless local area network access network in accordance with the access network discovery and selection function discovery information.

2. An apparatus according to Claim 1 further comprising means for relying upon the respective wireless local area network access network to obtain operator services from the core network in an instance in which the respective wireless local area network access network supports interworking with the core network.

3. An apparatus according to any one of Claims 1-2 wherein the access network interworking information is included within an access network type leaf or node of an access network discovery and selection function management object.

4. An apparatus according to any one of Claims 1-2 wherein the access network interworking information is included within a core network interworking leaf or node of an access network discovery and selection function management object.

5. An apparatus according to any one of Claims 1-2 wherein the access network interworking information is included within an access network information reference container of an access network discovery and selection function management object.

6. An apparatus according to any one of Claims 1-5 wherein the access network interworking information comprises information regarding one or more internet protocol IP mobility modes.

7. An apparatus according to any one of Claims 1-6 wherein the access network discovery and selection function discovery information further comprises information regarding one or more supported services.

8. An apparatus according to Claim 7 wherein the information regarding one or more supported services comprises information regarding one or more restrictions on the supported services.

9. A method comprising, at a mobile terminal (10):
accessing (30) access network discovery and selection function discovery information, wherein the access network discovery and selection function discovery information comprises access network interworking information identifying one or more wireless local area network access networks (12) and indicating that the respective wireless local area network access networks support interworking with a core network (14), wherein the access network interworking information further comprises information identifying one or more respectively supported interfaces; and
causing (38) a connection to be established with a respective wireless local area network access network in accordance with the access network discovery and selection function discovery information.

10. A computer program product comprising at least one non-transitory computer-readable storage medium having computer-executable program code instructions stored therein, the computer-executable program code instructions comprising program code instructions that, when executed by a processor of the mobile terminal (10), cause the mobile terminal (10) to:
access (30) access network discovery and selection function discovery information, wherein the access network discovery and selection function discovery information comprises access network interworking information identifying one or more wireless local area network access networks (12) and indicating that the respective wireless local area network access networks support interworking with a core network (14), wherein the access network interworking information further comprises information identifying one or more respectively supported interfaces; and
cause (38) a connection to be established with a respective wireless local area network access network in accordance with the access network discovery and selection function discovery information.

11. A computer program product according to Claim 10 wherein the access network interworking information is included within an access network type leaf or node of an access network discovery and selection function management object.

## Patentansprüche

1. Vorrichtung, die Mittel für Folgendes an einem mobilen Endgerät (10) umfasst:
Zugreifen (30) auf Informationen zu Zugangsnetzwerkentdeckung und Auswahlfunktionsentdeckung, wobei die Informationen zu Zugangsnetzwerkentdeckung und Auswahlfunktionsentdeckung Zugangsnetzwerkszusammenarbeitsinformationen umfassen, die eine oder mehrere drahtlose lokale Zugangsnetzwerke (12) identifizieren und anzeigen, dass die jeweiligen drahtlosen lokalen Zugangsnetzwerke das Zusammenarbeiten mit einem Kernnetzwerk (14) unterstützen, wobei die Zugangsnetzwerkszusammenarbeitsinformationen ferner Informationen umfassen, die eine oder mehrere jeweils unterstützte Schnittstellen identifizieren; und
Bewirken (38), dass gemäß den Informationen zu Zugangsnetzwerkentdeckung und Auswahlfunktionsentdeckung eine Verbindung mit einem jeweiligen drahtlosen lokalen Zugangsnetzwerk aufgebaut wird.

2. Vorrichtung nach Anspruch 1, die ferner Mittel zum Sichergehen, dass das jeweilige drahtlose lokale Zugangsnetzwerk in einem Fall, in dem das jeweilige drahtlose lokale Zugangsnetzwerk das Zusammenarbeiten mit dem Kernnetzwerk unterstützt, Betreiberdienste vom Kernnetzwerk erhält.

3. Vorrichtung nach einem der Ansprüche 1-2, wobei die Zugangsnetzwerkszusammenarbeitsinformationen in einem Zugangsnetzwerkblatt oder -knoten eines Zugangsnetzwerkentdeckungs- und Auswahlfunktionsverwaltungsobjekts beinhaltet sind.

4. Vorrichtung nach einem der Ansprüche 1-2, wobei die Zugangsnetzwerkszusammenarbeitsinformationen in einem Kernnetzwerkzusammenarbeitsblatt oder -knoten eines Zugangsnetzwerkentdeckungs- und Auswahlfunktionsverwaltungsobjekts beinhaltet sind.

5. Vorrichtung nach einem der Ansprüche 1-2, wobei die Zugangsnetzwerkszusammenarbeitsinformationen in einem Zugangsnetzwerkinformationsreferenzcontainer eines Zugangsnetzwerkentdeckungs- und Auswahlfunktionsverwaltungsobjekts beinhaltet sind.

6. Vorrichtung nach einem der Ansprüche 1-5, wobei die Zugangsnetzwerkszusammenarbeitsinformationen Informationen über einen oder mehrere Internetprotokoll(IP)-Mobilitätsmodi umfassen.

7. Vorrichtung nach einem der Ansprüche 1-6, wobei die Informationen zu Zugangsnetzwerkentdeckung und Auswahlfunktionsentdeckung ferner Informationen über einen oder mehrere unterstützte Dienste umfassen.

8. Vorrichtung nach Anspruch 7, wobei die Informationen über einen oder mehrere unterstützte Dienste Informationen über eine oder mehrere Einschränkungen der unterstützten Dienste umfassen.

9. Verfahren, das an einen mobilen Endgerät (10) Folgendes umfasst:
Zugreifen (30) auf Informationen zu Zugangsnetzwerkentdeckung und Auswahlfunktionsentdeckung, wobei die Informationen zu Zugangsnetzwerkentdeckung und Auswahlfunktionsentdeckung Zugangsnetzwerkszusammenarbeitsinformationen umfassen, die eine oder mehrere drahtlose lokale Zugangsnetzwerke (12) identifizieren und anzeigen, dass die jeweiligen drahtlosen lokalen Zugangsnetzwerke das Zusammenarbeiten mit einem Kernnetzwerk (14) unterstützen, wobei die Zugangsnetzwerkszusammenarbeitsinformationen ferner Informationen umfassen, die eine oder mehrere jeweils unterstützte Schnittstellen identifizieren; und
Bewirken (38), dass gemäß den Informationen zu Zugangsnetzwerkentdeckung und Auswahlfunktionsentdeckung eine Verbindung mit einem jeweiligen drahtlosen lokalen Zugangsnetzwerk aufgebaut wird.

10. Computerprogrammprodukt, das mindestens ein nichttransitorisches computerlesbares Speichermedium umfasst, in dem computerausführbare Programmcodeanweisungen gespeichert sind, wobei die computerausführbaren Programmcodeanweisungen Programmcodeanweisungen umfassen, die, wenn sie von einem Prozessor eines mobilen Endgeräts (10) ausgeführt werden, bewirken, dass das mobile Endgerät (10) Folgendes durchführt:
Zugreifen (30) auf Informationen zu Zugangsnetzwerkentdeckung und Auswahlfunktionsentdeckung, wobei die Informationen zu Zugangsnetzwerkentdeckung und Auswahlfunktionsentdeckung Zugangsnetzwerkszusammenarbeitsinformationen umfassen, die eine oder mehrere drahtlose lokale Zugangsnetzwerke (12) identifizieren und anzeigen, dass die jeweiligen drahtlosen lokalen Zugangsnetzwerke das Zusammenarbeiten mit einem Kernnetzwerk (14) unterstützen, wobei die Zugangsnetzwerkszusammenarbeitsinformationen ferner Informationen umfassen, die eine oder mehrere jeweils unterstützte Schnittstellen identifizieren; und
Bewirken (38), dass gemäß den Informationen zu Zugangsnetzwerkentdeckung und Auswahlfunktionsentdeckung eine Verbindung mit einem jeweiligen drahtlosen lokalen Zugangsnetzwerk aufgebaut wird.

11. Computerprogrammprodukt nach Anspruch 10, wobei die Zugangsnetzwerkszusammenarbeitsinformationen in einem Zugangsnetzwerkblatt oder -knoten eines Zugangsnetzwerkentdeckungs- und Auswahlfunktionsverwaltungsobjekts beinhaltet sind.

## Revendications

1. Appareil comprenant des moyens pour, au niveau d'un terminal mobile (10) :
accéder (30) à des informations de découverte de fonction de découverte et de sélection de réseau d'accès, dans lequel les informations de découverte de fonction de découverte et de sélection de réseau d'accès comprennent des informations d'interfonctionnement de réseau d'accès identifiant un ou plusieurs réseaux d'accès de réseau local sans fil (12) et indiquant que les réseaux d'accès de réseau local sans fil respectifs acceptent un interfonctionnement avec un réseau central (14), dans lequel les informations d'interfonctionnement de réseau d'accès comprennent en outre des informations identifiant une ou plusieurs interfaces acceptées respectivement ; et
amener (38) une connexion à être établie avec un réseau d'accès de réseau local sans fil respectif conformément aux informations de découverte de fonction de découverte et de sélection de réseau d'accès.

2. Appareil selon la revendication 1 comprenant en outre des moyens pour s'appuyer sur le réseau d'accès de réseau local sans fil respectif pour obtenir des services d'opérateur du réseau central dans une instance dans laquelle le réseau d'accès de réseau local sans fil respectif accepte un interfonctionnement avec le réseau central.

3. Appareil selon l'une quelconque des revendications 1-2 dans lequel les informations d'interfonctionnement de réseau d'accès sont incluses dans une feuille ou un nœud de type réseau d'accès d'un objet de gestion de fonction de découverte et de sélection de réseau d'accès.

4. Appareil selon l'une quelconque des revendications 1-2 dans lequel les informations d'interfonctionnement de réseau d'accès sont incluses dans une feuille ou un nœud d'interfonctionnement avec un réseau central d'un objet de gestion de fonction de découverte et de sélection de réseau d'accès.

5. Appareil selon l'une quelconque des revendications 1-2 dans lequel les informations d'interfonctionnement de réseau d'accès sont incluses dans un conteneur de référence d'informations de réseau d'accès d'un objet de gestion de fonction de découverte et de sélection de réseau d'accès.

6. Appareil selon l'une quelconque des revendications 1-5 dans lequel les informations d'interfonctionnement de réseau d'accès comprennent des informations concernant un ou plusieurs modes de mobilité de protocole Internet IP.

7. Appareil selon l'une quelconque des revendications 1-6 dans lequel les informations de découverte de fonction de découverte et de sélection de réseau d'accès comprennent en outre des informations concernant un ou plusieurs services acceptés.

8. Appareil selon la revendication 7 dans lequel les informations concernant un ou plusieurs services acceptés comprennent des informations concernant une ou plusieurs restrictions aux services acceptés.

9. Procédé comprenant, au niveau d'un terminal mobile (10) :
l'accès (30) à des informations de découverte de fonction de découverte et de sélection de réseau d'accès, dans lequel les informations de découverte de fonction de découverte et de sélection de réseau d'accès comprennent des informations d'interfonctionnement de réseau d'accès identifiant un ou plusieurs réseaux d'accès de réseau local sans fil (12) et indiquant que les réseaux d'accès de réseau local sans fil respectifs acceptent un interfonctionnement avec un réseau central (14), dans lequel les informations d'interfonctionnement de réseau d'accès comprennent en outre des informations identifiant une ou plusieurs interfaces acceptées respectivement ; et
le fait d'amener (38) une connexion à être établie avec un réseau d'accès de réseau local sans fil respectif conformément aux informations de découverte de fonction de découverte et de sélection de réseau d'accès.

10. Produit-programme informatique comprenant au moins un support d'enregistrement lisible par ordinateur non transitoire présentant des instructions de code de programme pouvant être exécutées par ordinateur mémorisées dans celui-ci, les instructions de code de programme pouvant être exécutées par ordinateur comprenant des instructions de code de programme qui, lorsqu'elles sont exécutées par un processeur du terminal mobile (10), amènent le terminal mobile (10) à :
accéder (30) à des informations de découverte de fonction de découverte et de sélection de réseau d'accès, dans lequel les informations de découverte de fonction de découverte et de sélection de réseau d'accès comprennent des informations d'interfonctionnement de réseau d'accès identifiant un ou plusieurs réseaux d'accès de réseau local sans fil (12) et indiquant que les réseaux d'accès de réseau local sans fil respectifs acceptent un interfonctionnement avec un réseau central (14), dans lequel les informations d'interfonctionnement de réseau d'accès comprennent en outre des informations identifiant une ou plusieurs interfaces acceptées respectivement ; et
amener (38) une connexion à être établie avec un réseau d'accès de réseau local sans fil respectif conformément aux informations de découverte de fonction de découverte et de sélection de réseau d'accès.

11. Produit-programme informatique selon la revendication 10 dans lequel les informations d'interfonctionnement de réseau d'accès sont incluses dans une feuille ou un nœud de type réseau d'accès d'un objet de gestion de fonction de découverte et de sélection de réseau d'accès.
